(19) Europäisches Patentamt
European Patent Office
Office européen des brevets

(11) EP 2 485 446 A1

(12) EUROPEAN PATENT APPLICATION
published in accordance with Art. 153(4) EPC

(43) Date of publication:
08.08.2012 Bulletin 2012/32

(21) Application number: 09849948.6

(22) Date of filing: 29.09.2009

(51) Int Cl.:
*H04L 27/26* (2006.01)

(86) International application number:
PCT/CN2009/074311

(87) International publication number:
WO 2011/038540 (07.04.2011 Gazette 2011/14)

(84) Designated Contracting States:
AT BE BG CH CY CZ DE DK EE ES FI FR GB GR
HR HU IE IS IT LI LT LU LV MC MK MT NL NO PL
PT RO SE SI SK SM TR

(71) Applicant: Fujitsu Limited
Kawasaki-shi, Kanagawa 211-8588 (JP)

(72) Inventors:
• ZHANG, Jie
  Beijing 100025 (CN)
• WU, Jianming
  Beijing 100025 (CN)

(74) Representative: Wilding, Frances Ward
Haseltine Lake LLP
300 High Holborn
London WC1V 7JH (GB)

(54) **METHOD AND DEVICE FOR ADDING PILOT**

(57) The present invention relates to a pilot addition method and a pilot addition apparatus. The pilot addition method is used in a transmitter for transmitting data to subscriber of an old system and subscriber of a new system serving as an updated system of the old system, including: judging whether or not to insert a pilot required by the subscriber of the new system into a current resource block, determining a sub-carrier symbol block serving as an insertion position of the pilot required by the subscriber of the new system, from one or more sub-carrier symbol blocks having a large influence on the statistical performance of a channel estimation for the subscriber of the old system; and inserting the pilot required by the subscriber of the new system into the sub-carrier symbol block serving as the insertion position of the pilot required by subscriber of a new system determined by the determining.

FIG. 1

**EP 2 485 446 A1**

**Description**

Field of the Invention

The present invention relates to a communication system, and particularly, to a pilot transmission method and apparatus when the number of the transmitting antennas of a system using the Multiple Input Multiple Output (MIMO) antenna technique is added.

Background of the Invention

In the multi-carrier wireless communication based on the Orthogonal Frequency Division Multiplexing (OFDM) technique, the broadband channel with a selectively fading frequency is uniformly divided into many channels with flat fading frequencies, and only a single tap frequency equalizer is required at the receiving end, which greatly simplifies the receiver equalization algorithm of the system.

On the other hand, in order to improve the transmission efficiency of the wireless system, the MIMO antenna technique has become an inevitable choice for the current and future wireless communication. In the MIMO-OFDM system, the usage of multiple transmitting-receiving antennas greatly increases the number of unknown parameters of the system, and these unknown parameters shall be estimated using the known pilot or training signal. In the LTE (LTE Release-8) standard, the supportable highest configuration of the transmitting-receiving antennas is 4x4. The precious spectrum resource can be utilized more effectively under a higher data transmission rate.

The LTE-A (LTE Release-10) standard requires a configuration of at most $8\times8$ transmitting-receiving antennas. In order that the LTE-A subscriber can accurately estimate the physical channels from 8 transmitting antennas, extra pilots are required, which is a severe challenge to an efficient and reasonable design of the reference signal.

The design of the pilot of the 8 transmitting antennas of the LTE-A system generally requires a forward compatibility. Thus the RS design of the successive 1 to 4 antennas shall meet the LTE standard. In order that the LTE-A subscriber estimates the physical channels from 8 transmitting antennas at the same time of downlink data transmission of the LTE system, the base station at the transmitting end shall punch some data sub-carriers of the LTE-A subscriber, and transmit the specific LTE-A antenna pilot signal on these data sub-carriers.

During the study of the present invention, the inventor finds that the current pilot transmission method for the LTE-A still has a large influence on the LTE system, and this at least because the pilot position is not properly selected.

The References for the present invention are listed as follows and incorporated herein by reference as if they were detailedly described in this specification.

Non-patent literatures:

(1) R1-090190, "RS design for DL higher order MIMO in LTE-A," CATT, 3GPP RAN1 #55bis Meeting, Ljubljana, Slovenia, January 2009.
(2) R1-090619, "DL RS Designs for Higher Order MIMO ," Samsung , 3GPP TSG RAN WG1 #56 Athens, Greece, February 9-13, 2009.
(3) R1-090144, "design aspects of high-order MIMO for LTE," Nortel, 3GPP RAN1 #55bis Meeting, Ljubljana, Slovenia, January 2009.
(4)R1-093196, "DL Reference Signal Design for CSI generation in LTE-Advanced", ZTE. 3GPP RAN1 #58 Meeting, Shenzhen, China, Aug 2009.

2. Patent literatures

(1) Chinese Patent CN101166053: Pilot Signal Transmission Method of Multi-Transmitting Antenna System.
(2) International Patent Publication No. W02008045803A: Method and Apparatus for Detection a Presence of a Signal in Communication Channel.
(3) International Patent Publication No. WO2008150772A1: Methods and Apparatus for Improved Utilization of Air Link Resource in A Wireless Communications System.

Summary of the Invention

The present invention is proposed with respect to the above conditions of the prior art, so as to reduce the influence of the pilot, which is inserted into the LTE-A, on the LTE subscriber, and at least provide a beneficial choice.

In order to achieve the above object, the following aspects are proposed according to the embodiments of the present invention:

Aspect 1: a pilot addition method used in a transmitter for transmitting data to subscriber of an old system and subscriber of a new system serving as an updated system of the old system, including:

judging whether or not to insert a pilot required by the subscriber of the new system into a current resource block, determining a sub-carrier symbol block serving as an insertion position of the pilot required by the subscriber of the new system, from one or more sub-carrier symbol blocks having a large influence on the statistical performance of a channel estimation for the subscriber of the old system; and

inserting the pilot required by the subscriber of the new system into the sub-carrier symbol block serving as the insertion position of the pilot required by the subscriber of the new system determined by the determining.

Aspect 2: the pilot addition method according to aspect 1, wherein the determining determines the insertion position of the pilot required by the subscriber of the new system according to a sector.

Aspect 3: the pilot addition method according to aspect 2, wherein in case a pilot of an antenna of the new system is located at a sub-carrier having a serial number k in a certain source block in the first sector, a sub-carrier for the pilot of the antenna in corresponding source block in the second sector has a serial number of k+1 modulo k , and a sub-carrier for the pilot of the antenna in corresponding source block in the third sector has a serial number of k+2 modulo k , k is a nonnegative integer.

Aspect 4: the pilot addition method according to aspect 1, wherein the old system is an LTE system and the new system is an LTE-A system.

Aspect 5: the pilot addition method according to aspect 4, wherein the judging determines inserting the pilot required by the subscriber of the new system into each of resource blocks in $0^{th}$ to $3^{rd}$ sub-frames, $6^{th}$ to $9^{th}$ sub-frames, or $2^{nd}$ to $9^{th}$ sub-frames, or $1^{st}$ to $4^{th}$ sub-frames and $6^{th}$ to $9^{th}$ sub-frames of the frame.

Aspect 6: the pilot addition method according to aspect 5, wherein the determining determines insertion positions of pilots of two different antennas in each of the resource blocks;

Aspect 7: the pilot addition method according to aspect 6, wherein the determining determines the insertion positions of the pilots of the two antennas in each of the resource blocks such that pilots added to resource blocks with the same serial number in adjacent sub-frames are for different antennas.

Aspect 8: the pilot addition method according to aspect 6, wherein the determining determines the insertion positions of the pilots of the two antennas in each of the resource blocks such that pilots added to resource blocks with adjacent serial numbers in the same sub-frame are for different antennas.

Aspect 9: the pilot addition method according to aspect 4, wherein the judging determines inserting the pilot required by the subscriber of the new system into each of resource blocks in a $2^{nd}$ sub-frame, a $3^{rd}$ sub-frame, a $7^{th}$ sub-frame and an **8**$^{th}$ sub-frame of the frame.

Aspect 10: the pilot addition method according to aspect 9, wherein the determining determines insertion positions of pilots of four different antennas in each of the resource blocks;

Aspect 11: the pilot addition method according to aspect 9, wherein the determining determines the insertion positions of the pilots of the four antennas in each of the resource blocks such that pilots added to resource blocks with the same serial number in adjacent sub-frames are for different antennas.

Aspect 12: the pilot addition method according to aspect 9, wherein the determining determines the insertion positions of the pilots of the four antennas in each of the resource blocks such that pilots added to resource blocks with adjacent serial numbers in the same sub-frame are for different antennas.

Aspect 13: the pilot addition method according to aspect 4, wherein the judging determines inserting the pilot required by the subscriber of the new system into each of resource blocks in any one or two of a $2^{nd}$ sub-frame, a $3^{rd}$ sub-frame, a $7^{th}$ sub-frame and an **8**$^{th}$ sub-frame of the frame.

Aspect 14: the pilot addition method according to aspect 13, wherein the determining determines insertion positions of pilots of eight different antennas in each of the resource blocks.

Aspect 15: the pilot addition method according to aspect 14, wherein the judging determines inserting the pilot required by the subscriber of the new system into each of the resource blocks of any two of the $2^{nd}$, $3^{rd}$, $7^{th}$ and $8^{th}$ sub-frames of the frame, the pilot is inserted into positions of sub-carrier symbol blocks determined by symbols with serial numbers 9 and 10 in sub-carriers with serial numbers 1, 4, 7 and 10 in the resource block.

Aspect 16: a pilot addition apparatus used in a transmitter for transmitting data to subscriber of an old system and subscriber of a new system serving as an updated system of the old system, including:

> a new system pilot addition judgment unit configured to judge whether or not to insert a pilot required by the subscriber of the new system into a current resource block;
> an insertion position determination unit configured to determine a sub-carrier symbol block serving as an insertion position of the pilot required by the subscriber of the new system, from one or more sub-carrier symbol blocks having a large influence on the statistical performance for a channel estimation of the subscriber of the old system; and
> an insertion unit configured to insert the pilot required by the subscriber of the new system into the sub-carrier symbol block serving as the insertion position of the pilot required by the subscriber of the new system determined by the insertion position determination unit.

Aspect 17: the pilot addition apparatus according to aspect 16, wherein the insertion position determination unit determines the insertion position of the pilot required by the subscriber of the new system according to sectors.

Aspect 18: the pilot addition apparatus according to aspect 17, wherein in case a pilot of an antenna of the new system is located at a sub-carrier having a serial number k in a certain source block in the first sector, a sub-carrier for the pilot of the antenna in corresponding source block in the second sector has a serial number of k+1 modulo k , and a sub-carrier for the pilot of the antenna in corresponding source block in the third sector has a serial number of k+2 modulo k , k is a nonnegative integer.

Aspect 19: the pilot addition apparatus according to aspect 16, wherein the old system is an LTE system and the new system is an LTE-A system.

Aspect 20: the pilot addition apparatus according to aspect 19, wherein the new system pilot addition judgment unit determines inserting the pilot required by the subscriber of the new system into each of resource blocks in $0^{th}$ to $3^{rd}$ sub-frames, $6^{th}$ to $9^{th}$ sub-frames, or $2^{nd}$ to $9^{th}$ sub-frames, or $1^{st}$ to $4^{th}$ sub-frames and $6^{th}$ to $9^{th}$ sub-frames of the frame.

Aspect 21: the pilot addition apparatus according to aspect 19, wherein the new system pilot addition judgment unit determines inserting the pilot required by the subscriber of the new system into each of resource blocks in a $2^{nd}$ sub-frame, a $3^{rd}$ sub-frame, a $7^{th}$ sub-frame and an $8^{th}$ sub-frame of the frame.

Aspect 22: the pilot addition apparatus according to aspect 19, wherein the new system pilot addition judgment unit determines inserting the pilot required by the subscriber of the new system into each of resource blocks in any one or two of a $2^{nd}$ sub-frame, a $3^{rd}$ sub-frame, a $7^{th}$ sub-frame and an $8^{th}$ sub-frame of the frame.

Aspect 23: the pilot addition apparatus according to aspect 19, wherein the insertion position determination unit determines the insertion position of the pilot required by the subscriber of the new system in each of the resource blocks such that pilots added to resource blocks with the same serial number in adjacent sub-frames are for different antennas.

Aspect 24: the pilot addition apparatus according to aspect 19, wherein the insertion position determination unit determines the insertion position of the pilot required by the subscriber of the new system in each of the resource blocks such that pilots added to resource blocks with adjacent serial numbers in the same sub-frames are for different antennas.

Aspect 25: a pilot insertion position determination apparatus, including:

> a first channel model channel estimation error statistical determination unit configured to determine a statistical distribution of channel estimation errors of an old system subscriber under a first channel model;
> a second channel model channel estimation error statistical determination unit configured to determine a statistical distribution of channel estimation errors of an old system subscriber under a second channel model; and
> a new system antenna pilot position determination unit configured to determine insertion positions of pilots of antennas of a new system in a sub-frame or RB, according to determination results of the first channel model channel estimation error statistical determination unit and the second channel model channel estimation error statistical determination unit.

Aspect 26: a pilot insertion position determination method, including:

> determining a statistical distribution of channel estimation errors of an old system subscriber under a first channel model;
> determining a statistical distribution of channel estimation errors of an old system subscriber under a second channel model; and
> determining insertion positions of pilots of antennas of a new system in a sub-frame or RB, according to determination results of the above two determining.

These and further aspects and features of the present invention will be clearer with reference to the following descriptions and drawings. In the descriptions and drawings, specific embodiments of the present invention are disclosed in details to indicate the ways in which the principle of the present invention may be employed. But it shall be appreciated that the present invention is not correspondingly limited in the scope. The present invention includes many changes, modifications and equivalents within the spirit and clauses of the accompanied claims.

Features that are described and/or illustrated with respect to one embodiment may be used in the same or similar way in one or more other embodiments to be combined with or replace the features of other embodiments.

Brief Description of the Drawings

Fig. 1 is a schematic block diagram of a pilot addition apparatus according to an embodiment of the present invention;

Fig. 2 is a schematic flowchart of a pilot addition method according to an embodiment of the present invention;

Fig. 3 is a schematic diagram of a CRS distribution of an LTE in a first sector;

Fig. 4 is a schematic diagram of a CRS distribution of an LTE in a second sector;

Fig. 5 is a schematic diagram of a CRS distribution of an LTE in a third sector;

Fig. 6 is a statistical distribution diagram of channel estimation errors under an ITU-PB3km/h channel model with respect to the CRS distribution as illustrated in Fig. 3, wherein the gray grids represent the sub-carrier symbol blocks with poor channel estimation performances;

Fig. 7 is a statistical distribution diagram of channel estimation errors under an ITU-VA120km/h channel model with respect to the CRS distribution as illustrated in Fig. 3, wherein the gray grids represent the sub-carrier symbol blocks with poor channel estimation performances;

Fig. 8 is a schematic diagram of an example of a CSI-RS pattern of an LTE-A acquired based on Figs. 6 and 7;

Fig. 9 is a statistical distribution diagram of channel estimation errors under an ITU-PB3km/h channel model with respect to the CRS distribution as illustrated in Fig. 4, wherein the gray grids represent the sub-carrier symbol blocks with poor channel estimation performances;

Fig. 10 is a statistical distribution diagram of channel estimation errors under an ITU-VA120km/h channel model with respect to the CRS distribution as illustrated in Fig. 4, wherein the gray grids represent the sub-carrier symbol blocks with poor channel estimation performances;

Fig. 11 is a schematic diagram of an example of a CSI-RS pattern of an LTE-A acquired based on Figs. 9 and 10;

Fig. 12 is a distribution diagram of channel estimation errors under an ITU-PA3km/h channel based on an RS as illustrated in Fig. 5, wherein the gray grids represent the sub-carrier symbol blocks with poor channel estimation performances;

Fig. 13 is a distribution diagram of channel estimation errors under an ITU-VA 120km/h channel based on an RS as illustrated in Fig. 5, wherein the gray grids represent the sub-carrier symbol blocks with poor channel estimation performances;

Fig. 14 is a schematic diagram of an example of a CSI-RS pattern of an LTE-A based on Figs. 12 and 13;

Fig. 15 is a schematic diagram of another example of a CSI-RS pattern of an LTE-A based on the second sector;

Fig. 16 illustrates an example of RS placement according to a first embodiment of the present invention;

Fig. 17 illustrates an example of RS placement according to a second embodiment of the present invention;

Fig. 18 illustrates an example of RS placement according to a third embodiment of the present invention;

Fig. 19 illustrates an example of RS resource block into which LTE-A is inserted, in the RS placement according to a fourth embodiment of the present invention;

Figs. 20-21 illustrate, respectively, schematic structure diagrams of a transmitter and a receiver of an LTE-A according to an embodiment of the present invention which are backward compatible with an LTE;

Fig. 22 illustrates a functional block diagram of a pilot insertion position determination apparatus according to an embodiment of the present invention;

Fig. 23 illustrates a flowchart of a pilot insertion position determination method according to an embodiment of the present invention;

Fig. 24 illustrates a block diagram of a computer capable of implementing the method and apparatus according to the embodiments of the present invention.

Detailed Description of the Embodiments

The embodiments of the present invention are detailedly described as follows with reference to the drawings. In order to be clear and concise, not all the features of the embodiments are described in the specification. However, it shall be appreciated that during the process of developing any of these embodiments, many specific decisions of the embodiment must be made to realize the developer's object. For example, the constraint conditions relevant to the system and service are satisfied, and these constraint conditions may vary with the embodiments. In addition, it shall be noted that although the development may be very complex and time consuming, the development is just a routine task for a person skilled in the art who benefits from the disclosure.

To be noted, in order to avoid the present invention from being vague due to unnecessary details, the drawings only illustrate device structures and/or processing steps closely related to the solution according to the present invention, while omitting other details not so closely related.

Before detailedly describing the embodiments of the present invention, some concepts of the prior art relevant to the present invention are introduced as follows.

In order to allocate the physical resources in a high efficiency, a physical frame is usually divided into many Transmitting Time Intervals (TTIs) in the time domain, and divided into many basic allocation units in the frequency domain. For example, in the latest LTE standard, one frame includes 10 TTIs each having 14 OFDM symbols; each TTI is divided into sub-blocks in a unit of 12 sub-carriers in the frequency domain; and a time-frequency resource block (hereinafter referred to as Resource Block (RB)) of 12 sub-carriers and 14 OFDM symbols constitute a basic physical resource unit. That is, one TTI includes a number of (e.g., 50) RBs continuous in the frequency domain. In the embodiments of the present invention, the TTI is also referred to as a sub-frame. In addition, 10 sub-frames in one frame are numbered as the $0^{th}$ to $9^{th}$ sub-frames, 14 symbols in one sub-frame are numbered as the $0^{th}$ to $13^{th}$ symbols, and 12 sub-carriers in one RB are numbered as the $0^{th}$ to $11^{th}$ sub-carriers.

Further, the reference signal design scheme for the multi-output antenna system is mainly based on the orthogonal Reference Signal (RS) design criterion, i.e., the resource elements occupied by the RSs of respective transmitting antennas are orthogonal to each other, thereby avoiding the mutual interference at the receiving end. The embodiments of the present invention are also described under the condition that the orthogonal RS design criterion is adopted. But the embodiments of the present invention are not limited to such condition, and other design criterions may also be used.

In the time-frequency 2D physical resource, when the Common Reference Signal (CRS) and data of the LTE and the CRS of the LTE-A are both existed, the CRS of the LTE-A cannot be overlapped with that of the LTE, and can only be placed on the data sub-carrier of the LTE by means of punching.

The inventor of the present invention studies the issue of transmitting pilots with the 8 transmitting antennas of the LTE-A system, and makes the following conclusion: the subscriber of the LTE shall carry out a channel estimation of all data sub-carriers of a received sub-frame before demodulating and decoding the received sub-frame, while the sub-carriers with poor channel estimation performance (i.e., certain specific sub-carriers, such as those far away from the pilot , whose channel estimation has a large relative error) has an obvious influence on the demodulating and decoding performance, thus the influence on the LTE frame decoding will be reduced by punching those sub-carriers.

In the embodiments of the present invention, the antennas used by the LTE system are called as LTE antennas (e.g., antennas 0-3), while the antennas used by the LTE-A system are called as LTE-A antennas (e.g., antennas 0-7). The pilots transmitted by the LTE antennas are called as LTE pilots, while the pilots transmitted by the LTE-A antennas are called as LTE-A pilots.

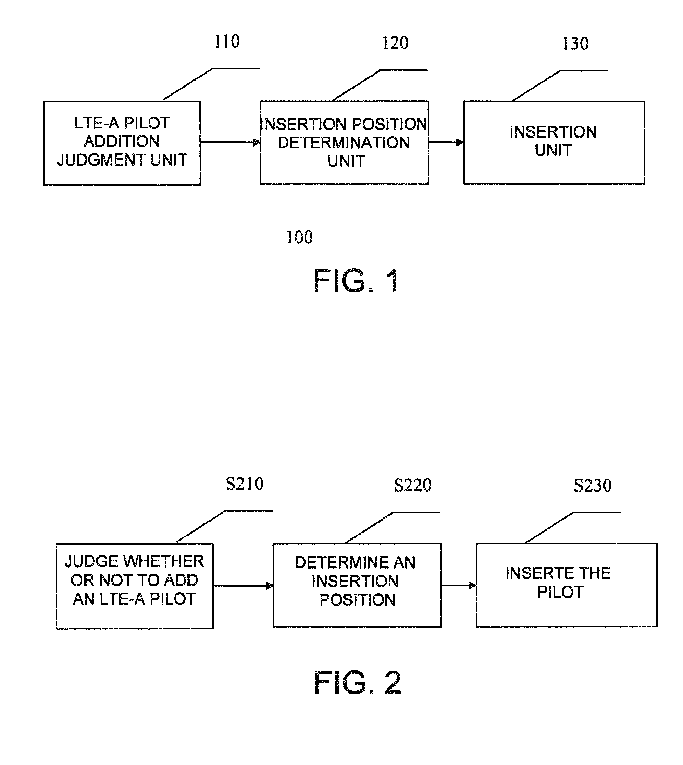

A pilot addition apparatus according to an embodiment of the present invention will be described as follows. Fig. 1 schematically illustrates a block diagram of a pilot addition apparatus according to an embodiment of the present invention. As illustrated in Fig. 1, a pilot addition unit 100 according to an embodiment of the present invention includes:

an LTE-A pilot addition judgment unit 110 configured to judge whether or not to insert an LTE-A pilot into current sub-frame, and if yes, further judge for each RB of the sub-frame whether or not to insert the LTE-A pilot;
an insertion position determination unit 120 configured to determine an insertion position of the LTE-A pilot, wherein the insertion position is located on a sub-carrier symbol block having a large influence on the statistical performance for a channel estimation of an LTE subscriber; and
an insertion unit 130 configured to insert the LTE-A pilot into the insertion position of the LTE-A pilot determined by the insertion position determination unit 120.

Fig. 2 schematically illustrates a flowchart of a pilot addition method according to an embodiment of the present invention. As illustrated in Fig. 2, a pilot addition method according to an embodiment of the present invention includes:

S210: judging whether or not to insert an LTE-A pilot into current sub-frame, and if yes, further judging for each RB of the sub-frame whether or not to insert the LTE-A pilot;
S220: determining an insertion position of the LTE-A pilot, wherein the insertion position is located on a sub-carrier symbol block having a large influence on the statistical performance for a channel estimation of an LTE subscriber; and
S230: inserting the LTE-A pilot into the insertion position of the LTE-A pilot determined by the insertion position determination unit 120.

Next, the operation of the insertion position determination unit 120 and step S220 will be described in details.

Firstly, it will be described how to determine the sub-carrier symbol block having a large influence on the statistical performance for the channel estimation of the LTE subscriber.

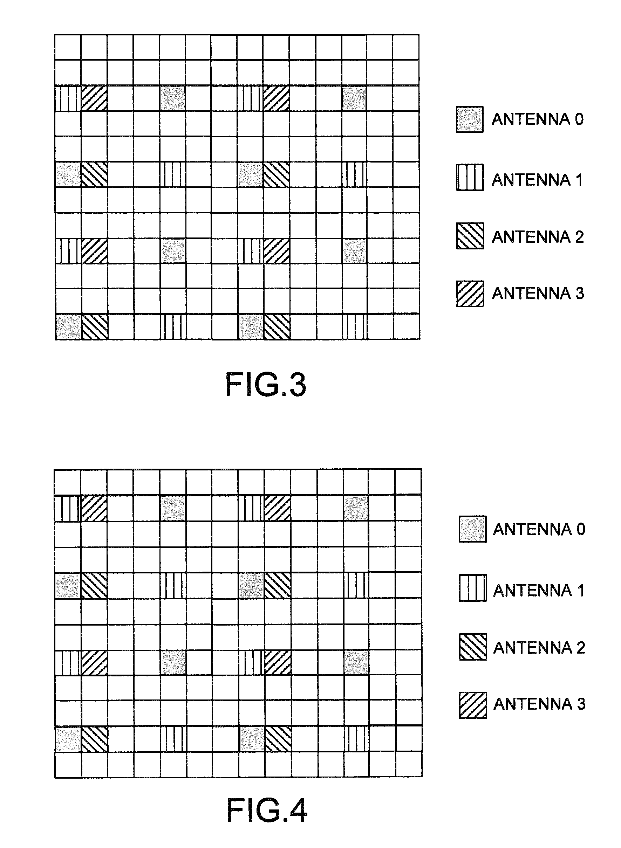

Figs. 3-5 illustrate the CRS positions (also referred to as pilot patterns) in the RB with respect to first to third sectors of an LTE, respectively (herein the first to third sectors belong to the same cell and are separated from each other by different orientations in the space; the spatial angle ranges covered by the three sectors are 10-120˚, 121 ˚-240˚ and 241˚-360˚, respectively). In the drawings, the horizontal axis represents different OFDM symbols and the longitudinal axis represents different sub-carriers.

Since the channel estimation algorithm is based on one or more RBs, the LTE data sub-carrier with poor channel estimation statistical performance may be determined according to the number and positions of the RSs in a specific region or through a simulation test.

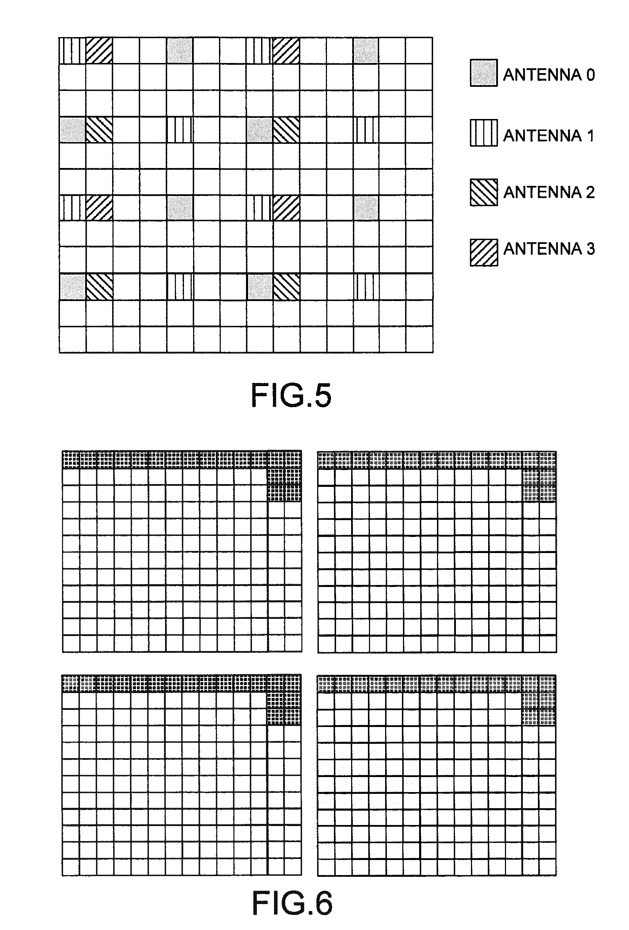

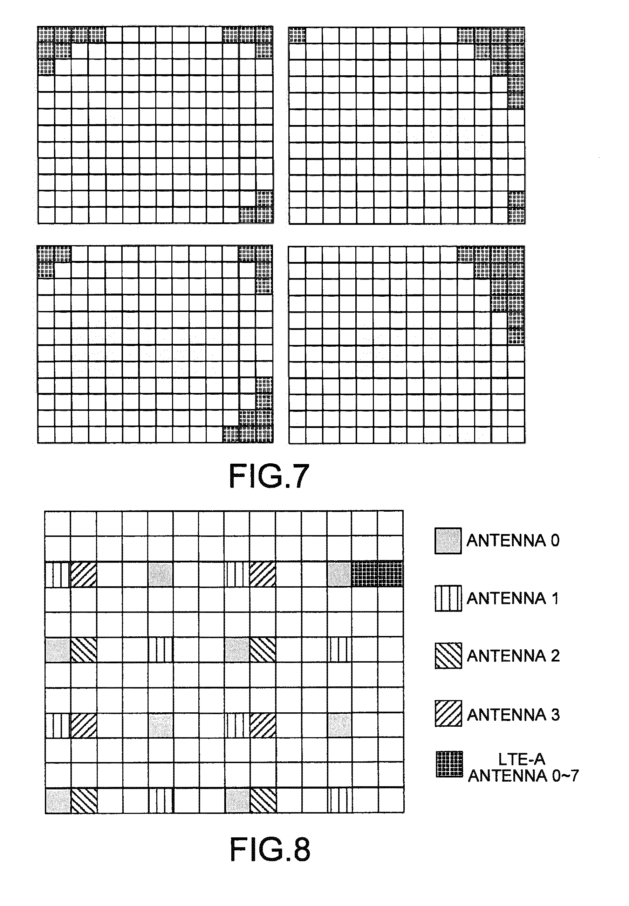

Fig. 6 is a statistical distribution diagram of LTE subscriber channel estimation errors under an ITU-PB3km/h channel model with respect to the CRS distribution as illustrated in Fig. 3, and Fig. 7 is a statistical distribution diagram of LTE subscriber channel estimation errors under an ITU-VA120km/h channel model with respect to the CRS distribution as illustrated in Fig. 3. In the drawings, the horizontal axis represents different OFDM symbols and the longitudinal axis represents different sub-carriers.

Figs. 6 and 7 each has four sub-diagrams corresponding to the four transmitting antennas of the LTE system, respectively.

The channel estimation algorithm for example may adopt the 2-dimension minimum means square error (2D MMSE) criterion based on one RB. With which, the channel estimation value on any grid (on the sub-carrier symbol block) in the one RB is:

$$\hat{h}_{i,j} = \overline{w}_{i,j} \cdot \overline{h}_p \qquad (1)$$

Herein $\hat{h}_{i,j}$ is an estimation value of a channel response on the $j^{th}$ OFDM symbol of the $i^{th}$ sub-carrier of a certain RB, $\overline{h}_p$ is a column vector consisting of channel responses of all pilot points in the RB, and $\overline{w}_{i,j}$ is an interpolation vector using the 2D MMSE criterion. The above channel estimation algorithm is not limited to the 2D MMSE criterion, and other linear interpolation method may also be used, wherein the form of channel estimation is completely the same as Equation (1), and only the element value of $\overline{w}_{i,j}$ is different. The statistical value of the channel estimation error on each sub-carrier of one RB is

$$E_{i,j} = E[|\hat{h}_{i,j} - h_{i,j}|^2] \qquad (2)$$

Herein E[.] is an operation for mathematical expectation.

As can be seen from Figs. 6-7, the statistical error of the channel estimation on the shadowed sub-carrier symbol block is large, which is caused by the CRS distribution on the RB. On this basis, in order to punch the sub-carrier at an appropriate position to place the LTE-A CRS while reducing the influence on the LTE data demodulating and decoding performance, the LTE data sub-carrier with a large channel estimation error is punched. Since different statistical error distributions of channel estimations may be obtained under different channel model conditions, the embodiments of the present invention consider the channel estimation error performances under different channel models, so as to improve the applicability of the LTE-A RS design obtained based on the method according to the embodiment of the invention. ITU-PB 3km/h and ITU-VA 120km/h are two typical channel models, thus they are taken as examples and described in the embodiments of the present invention. It shall be appreciated that other channel model(s) shall be used to replace one or both of these channel models, or combine with the two channel models to determine the LTE data sub-carrier with a large channel estimation error. Herein the two channel models are just exemplary, and the actual design may be based on other channel models recommended by the International Telecommunication Union (ITU), e.g., the PB or VA channel corrected under different moving speeds.

As can be seen from Fig. 6, the statistical errors of the channel estimations on the following sub-carrier symbol blocks are larger for LTE antennas 0-3 under the ITU-PB 3km/h channel model:

sub-carrier symbol blocks (0, 11), (1, 11), (2, 11), (3, 11), (4, 11), (5, 11), (6, 11), (7, 11), (8, 11), (9, 11), (10, 11), (11, 11), (12,11), (13,11), (12, 10), (13, 10), (12, 9), (13, 9).

As can be seen from Fig. 7, the statistical errors of the channel estimations on the following sub-carrier grids are larger for LTE antennas 0-3 under the ITU-VA120km/h channel model:

for antenna 0, sub-carrier symbol blocks (0, 9), (0, 10), (0, 11), (1, 10), (1, 11), (2, 11), (3,11), (11, 11), (12, 11), (12, 0), (13, 11), (13, 10), (13, 1), (13, 0);

for antenna 1, sub-carrier symbol blocks (0, 11), (10, 11), (11, 10), (11,11), (12, 11), (12, 10), (12, 9), (13, 11), (13, 10), (13, 9), (13, 8), (13, 7), (13, 0), (13, 1);

for antenna 2, sub-carrier symbol blocks (0, 11), (0, 10), (1, 11), (11, 0), (12, 0), (12, 1), (12, 11), (13, 0), (13,1), (13, 2), (13, 3), (13, 4), (13, 9), (13, 10), (13, 11);

for antenna 3, sub-carrier symbol blocks (10, 11), (11, 11), (11, 10), (12, 11), (12, 10), (12, 9), (12, 8), (13, 11), (13, 10), (13, 9), (13, 8), (13, 7), (13, 6).

It can be seen that sub-carrier symbol blocks (12, 11), (13, 11), (13, 10) totally occur for 8 times, and the occurrence frequency is the highest; the grids (11, 11), (13, 9), (0, 11) occur for 7 times; and the grids (12, 9), (1, 11), (2, 11) occur for 6 times.

Thus appropriate positions can be selected according to the above order and in combination with other constraint conditions (e.g., the LTE-A CRS cannot be overlapped with the LTE CRS, some positions are occupied by other dedicated data, etc.).

For example on the basis of Figs. 6-7, when the LTE-A RS needs to be placed in a certain RB, it may be placed in any of the three grids at the upper right corner of the RB. In addition, it shall be noted that for the convenience of description, the statistical errors of the channel estimations on the sub-carrier grids are simply classified into large and small errors. But in fact, the error may be determined according to the concrete value, so as to judge the sub-carrier to which the LTE-A RS shall be placed.

In consideration of other constraint conditions and by means of the simulation, the inventor finds that the LTE-A RS pattern as illustrated in Fig. 8 can be adopted.

In Fig. 8, the grid marked as antennas 0-7 represents the position where the pilot of corresponding LTE-A transmitting antenna may be placed.

To be noted, the LTE-A RS pattern as illustrated in Fig. 8 is just an exemplary distribution in case the pilots of two antennas are to be inserted into the RB and some positions (e.g., the two grids corresponding to the 11th sub-carrier and the two grids corresponding to the 10th grid at the upper right corner) has been occupied, rather than a limitation to the present invention. A person skilled in the art shall appreciate that other positions can be selected upon the actual conditions to be used together with or replace the two positions.

As can be seen from Figs. 6-7, the RS pattern as illustrated in Fig. 8 has a small influence on the data demodulating and decoding performance of the LTE system. Thus the pattern as illustrated in Fig. 8 may be used for the LTE-A CSI-RS of the first sector, and it has a small influence on the LTE system.

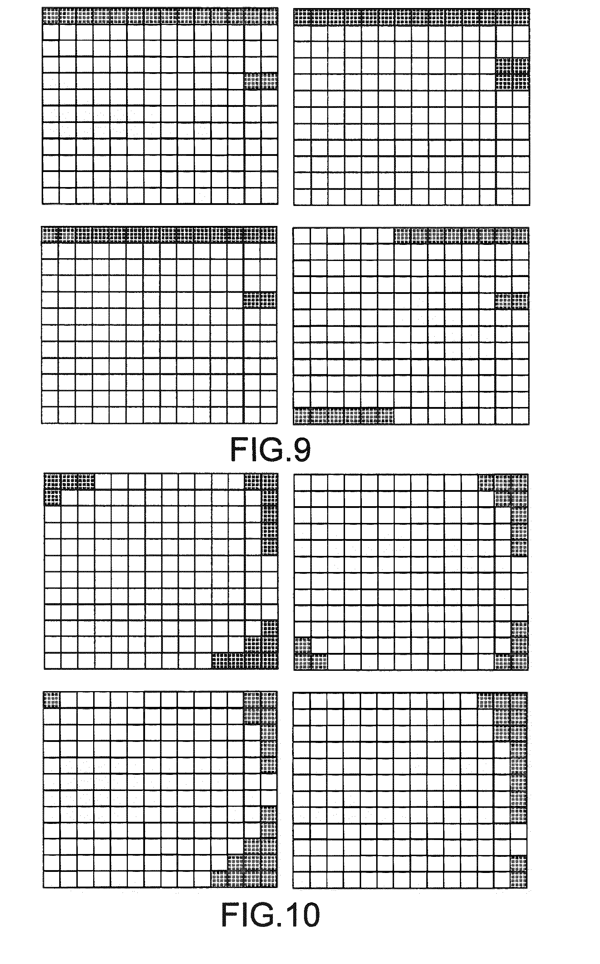

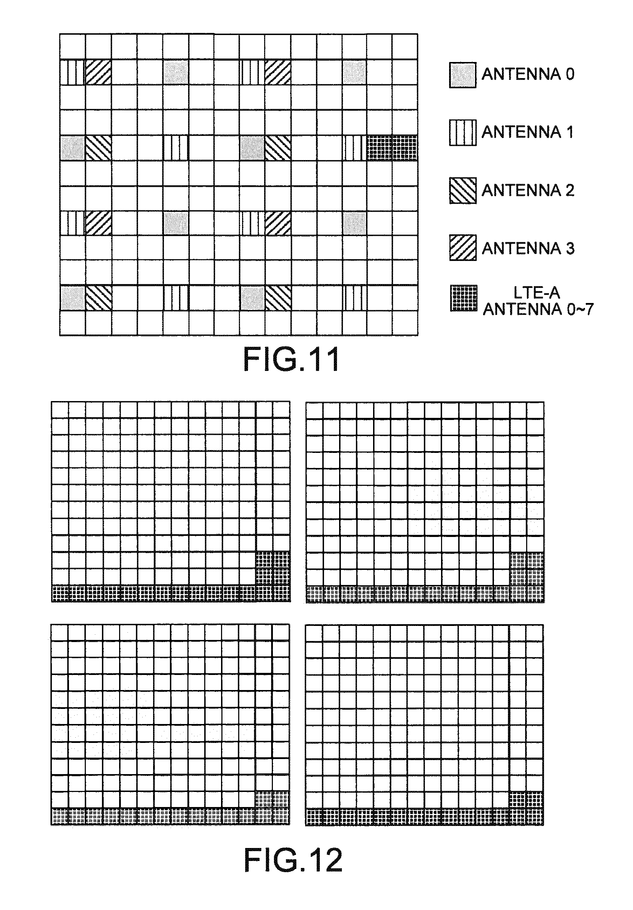

Fig. 9 is a statistical distribution diagram of LTE subscriber channel estimation errors under an ITU-PB 3km/h channel model with respect to the CRS distribution as illustrated in Fig. 4, Fig. 10 is a statistical distribution diagram of LTE subscriber channel estimation errors under an ITU-VA120km/h channel model with respect to the CRS distribution as illustrated in Fig. 4, and Fig. 11 illustrates an example of an LTE-A CSI-RS pattern acquired based on Figs. 9 and 10 and in consideration of other constraint conditions. As illustrated in Fig. 11, in the second sector, the LTE-A RS may be placed in two grids with the coordinates of (12, 7) and (13, 7).

Similarly, the LTE-A RS pattern as illustrated in Fig. 11 is just an exemplary distribution in case the pilots of two antennas are to be inserted into the RB and some positions has been occupied, rather than a limitation to the present invention. A person skilled in the art shall appreciate that other positions can be selected upon the actual conditions to be used together with or replace the two positions.

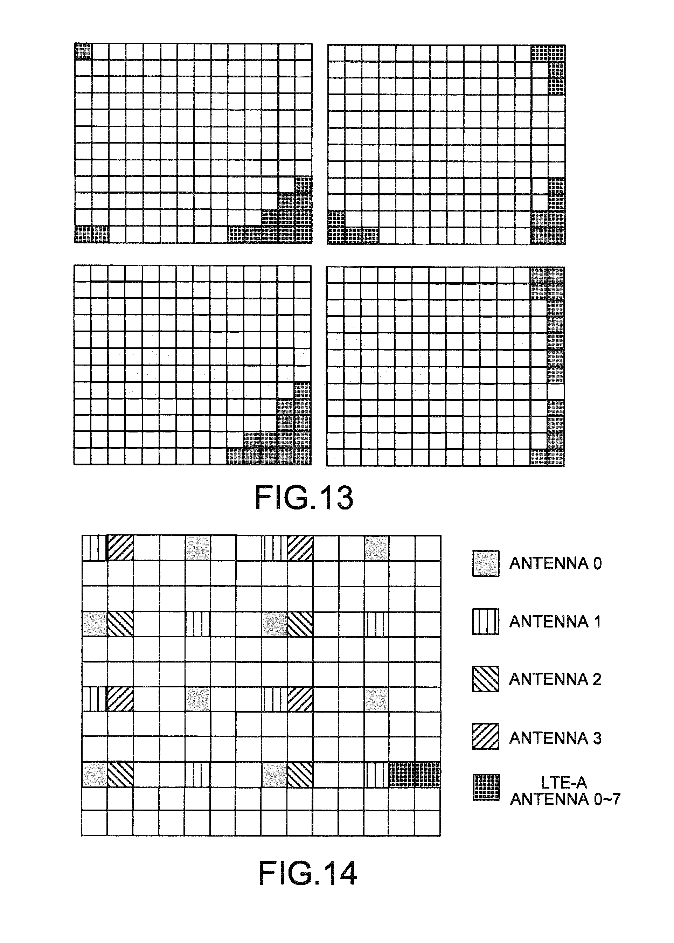

Fig. 12 is a statistical distribution diagram of LTE subscriber channel estimation errors under an ITU-PB3km/h channel model with respect to the CRS distribution as illustrated in Fig. 5, Fig. 13 is a statistical distribution diagram of LTE subscriber channel estimation errors under an ITU-VA120km/h channel model with respect to the CRS distribution as illustrated in Fig. 5, and Fig. 14 illustrates an LTE-A CSI-RS pattern acquired based on Figs. 12 and 13 and in consideration of other constraint conditions. As illustrated in Fig. 14, in the third sector, the LTE-A RS may be placed in two grids with the coordinates of (12, 2) and (13, 2).

Similarly, the LTE-A RS pattern as illustrated in Fig. 14 is just an exemplary distribution in case the pilots of two antennas are to be inserted into the RB and some positions are occupied, rather than a limitation to the present invention. A person skilled in the art shall appreciate that other positions can be selected upon the actual conditions to be used together with or replace the two positions

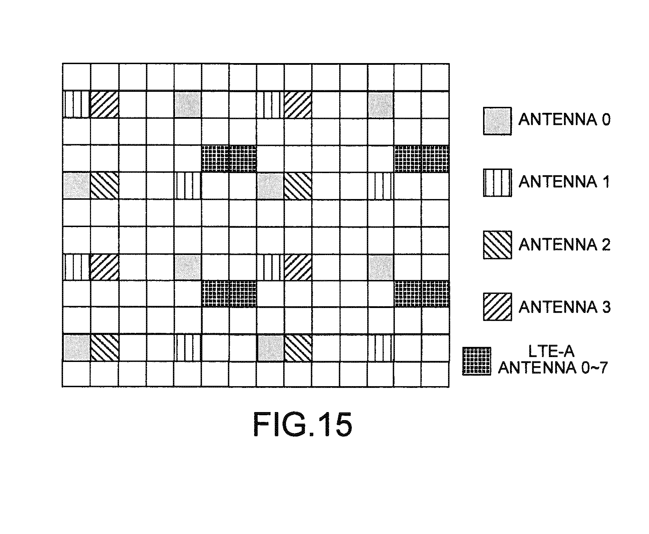

The above positions for placing the LTE-A CRS in the RB as illustrated in Figs. 8, 11 and 14 are just exemplary, for example in case the pilots of 4 LTE-A antennas are placed in the second sector, the LTE-A CRS may also be placed as illustrated in Fig. 15. Fig. 15 illustrates another example of a distribution diagram of RBs wherein the LTE-A CRSs are placed in the second sector.

To be noted, the above descriptions only concern the channel estimation of a single RB. But in the actual implementation of the channel estimation, a combined channel estimation may be required for continuous RBs, and the acquired channel estimation error may be different from the statistical error distributions in the above drawings. For example, a combined channel estimation may be carried out using 4 or 8 continuous RBs in the frequency domain. Thus the error distributions in Figs. 6, 7, 9, 10, 12 and 13 may be changed above each RB, and corresponding error distribution rules shall be re-inspected to obtain corresponding LTE-A RS patterns.

In addition, the above descriptions only concern the CRS positions in the RB when the LTE-A CRSs shall be placed in the RB. But the number of the LTE-A CRSs is small, e.g., currently the CRS has a cycle of 5ms or 10ms in the time axis and a cycle of 6 or 12 sub-carriers in the frequency axis. Thus the positions of the RBs for placing the RSs shall be determined, e.g., determining the positions of the RBs for placing the RSs among totally 500 RBs in 10ms. The criterion for determining the positions for example may be a criterion of minimizing the CSI estimation error, i.e., selecting specific RBs to place the CRSs so that the CSI estimation is the most accurate. Other criterions may also be adopted to determine the positions of the RBs for placing the RSs.

Next, the implementations of placing the RSs according to the embodiments of the present invention will be described, which are just exemplary rather than limitations to the present invention.

RS Placement According to the First Embodiment

According to the embodiment of the present invention, Rss for the LTE-A subscriber (LTE-A RSs) are transmitted on 8 specific sub-frames in each frame, and other sub-frames are only used to transmit RSs for the LTE subscriber (LTE RSs). For example, the LTE-A RSs may be inserted into the $0^{th}$ to $3^{rd}$ and the $6^{th}$ to $9^{th}$ sub-frames, the $2^{nd}$ to $9^{th}$ sub-frames or the $1^{st}$ to $4^{th}$ and the $6^{th}$ to $9^{th}$ sub-frames in each frame.

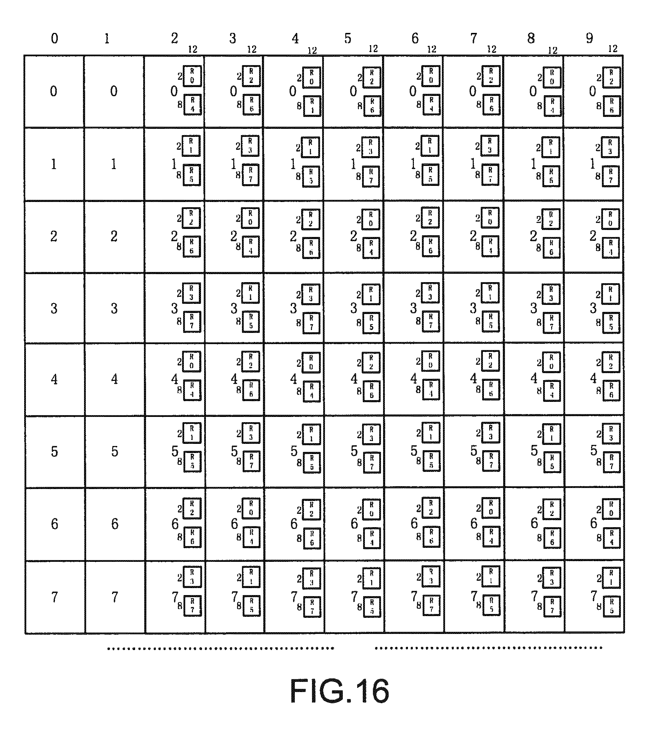

Fig. 16 illustrates an example of RS placement according to a first embodiment of the present invention. As illustrated in Fig. 16, the pilots of 8 antennas of the LTE-A subscriber are placed in the $2^{nd}$ to $9^{th}$ sub-frames. In Fig. 16, the digits 0-9 in the top row represent the serial numbers of the sub-frames in the current frame, and the digits (12 in Fig. 16) with smaller sizes near the digits 0-9 in the top row represent the symbols arranged with the pilots of the LTE-A subscriber in the sub-frame. The digit in each large grid (0-7 in Fig. 16) represents the RB serial number in the current frame. In the $2^{nd}$ to $9^{th}$ sub-frames, $\boxed{\begin{matrix} R \\ K \end{matrix}}$ in the small grid indicates that the CSI-RS of a $k^{th}$ transmitting antenna is placed at the position, wherein k = 0, 1, 2, 3, 4, 5, 6 or 7. The digit in front of $\boxed{\begin{matrix} R \\ K \end{matrix}}$ represents the serial number of the sub-carrier in one RB.

In the embodiment as illustrated in Fig. 16, the RSs of two different antennas are placed in each RB of each of the $2^{nd}$ to $9^{th}$ sub-frames, and the RSs placed in the RBs adjacent to each other of each sub-frame are for different antennas. For example as illustrated in Fig. 16, in the $2^{nd}$ sub-frame, the RSs of the $0^{th}$ and $4^{th}$ antennas are placed in the $2^{nd}$ and $8^{th}$ sub-carriers in the $0^{th}$ RB, the RSs of the $15^{st}$ and $5^{th}$ antennas are placed in the $2^{nd}$ and $8^{th}$ sub-carriers in the $1^{st}$ RB, the RSs of the $2^{nd}$ and $6^{th}$ antennas are placed in the $2^{nd}$ and $8^{th}$ sub-carriers in the $2^{nd}$ RB, and the RSs of the $3^{rd}$ and $7^{th}$ antennas are placed in the $2^{nd}$ and $8^{th}$ sub-carriers in the **$3^{rd}$** RB.

Further, the RSs placed in the RBs with the same serial number in adjacent sub-frames are also for different antennas. As illustrated in Fig. 16, the RSs of the $0^{th}$ and $4^{th}$ antennas are placed in the $2^{nd}$ and $8^{th}$ sub-carriers in the $0^{th}$ RB in the $2^{nd}$ sub-frame, and the RSs of the $2^{nd}$ and $6^{th}$ antennas are placed in the $2^{nd}$ and $8^{th}$ sub-carriers in the $0^{th}$ RB in the $3^{rd}$ sub-frame. The RSs of the $1^{st}$ and $5^{th}$ antennas are placed in the $2^{nd}$ and $8^{th}$ sub-carriers in the $1^{st}$ RB in the $2^{nd}$ sub-frame, and the RSs of the $3^{rd}$ and $7^{th}$ antennas are placed in the $2^{nd}$ and $8^{th}$ sub-carriers in the $1^{st}$ RB in the $3^{rd}$ sub-frame. The RSs of the $2^{nd}$ and $6^{th}$ antennas are placed in the $2^{nd}$ and $8^{th}$ sub-carriers in the $2^{nd}$ RB in the $2^{nd}$ sub-frame, and the RSs of the $0^{th}$ and $4^{th}$ antennas are placed in the $2^{nd}$ and $8^{th}$ sub-carriers in the $2^{nd}$ RB in the $3^{rd}$ sub-frame, and so on.

To be noted, in the embodiment as illustrated in Fig. 16, in each RB the RSs for various antennas are placed at the $12^{th}$ symbol of the $2^{nd}$ sub-carrier and the $12^{th}$ symbol of the $8^{th}$ sub-carrier, respectively, which is just exemplary rather than limitations to the present invention. Corresponding positions (i.e., positions of sub-carriers and symbols having the largest influence on the statistical error of LTE subscriber channel estimation) may be selected according to the above method for selecting sub-carriers for each or multiple RBs.

RS Placement According to the Second Embodiment

According to this embodiment, LTE-A RSs are transmitted on 4 specific sub-frames in a frame, and other sub-frames are only used to transmit LTE RSs. For example, the LTE-A RSs may be inserted into the $2^{nd}$, $3^{rd}$, $7^{th}$ and $8^{th}$ sub-frames in each frame.

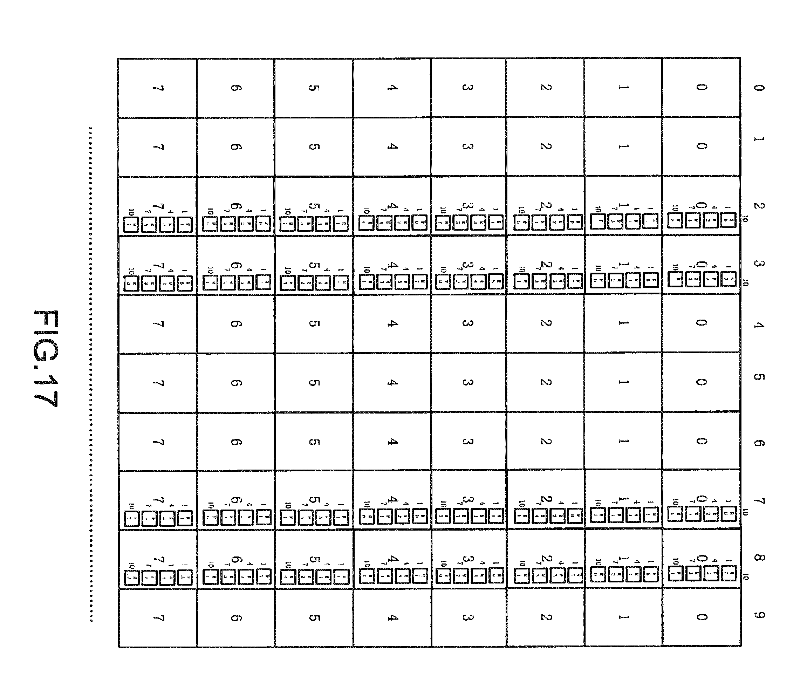

Fig. 17 illustrates an example of RS placement according to a second embodiment of the present invention.

As illustrated in Fig. 17, the pilots of 8 antennas of the LTE-A subscriber are placed in the $2^{nd}$, $3^{rd}$, $7^{th}$ and $8^{th}$ sub-frames. The symbol meanings in Fig. 17 are the same as those in Fig. 16.

In the embodiment as illustrated in Fig. 17, the RSs of four different antennas are placed in each RB of each of the $2^{nd}$, $3^{rd}$, $7^{th}$ and $8^{th}$ sub-frames, and the RSs placed in the adjacent RBs of each sub-frame are for different antennas. For example as illustrated in Fig. 17, in the $2^{nd}$ sub-frame, the RSs of the $0^{th}$, $2^{nd}$, $4^{th}$ and $6^{th}$ antennas are placed in the $1^{st}$, $4^{th}$, $7^{th}$ and $10^{th}$ sub-carriers in the $0^{th}$ RB, the RSs of the $1^{st}$, $3^{rd}$, $5^{th}$ and $7^{th}$ antennas are placed in the $1^{st}$, $4^{th}$ $7^{th}$ and $10^{th}$ sub-carriers in the $1^{st}$ RB, and so on.

Further, the RSs placed in the RBs with the same serial number in adjacent sub-frames are also for different antennas. As illustrated in Fig. 17, the RSs of the $0^{th}$, $2^{nd}$, $4^{th}$ and $6^{th}$ antennas are placed in the $1^{st}$, $4^{th}$, $7^{th}$ and $10^{th}$ sub-carriers in the $0^{th}$ RB in the $2^{nd}$ sub-frame, and the RSs of the $7^{th}$, $5^{th}$, $3^{rd}$ and $1^{st}$ antennas are placed in the $1^{st}$, $4^{th}$, $7^{th}$ and $10^{th}$ sub-carriers in the $0^{th}$ RB in the $3^{rd}$ sub-frame. The RSs of the $1^{st}$, $3^{rd}$, $5^{th}$ and $7^{th}$ antennas are placed in the $1^{st}$, $4^{th}$, $7^{th}$ and $10^{th}$ sub-carriers in the $1^{st}$ RB in the $2^{nd}$ sub-frame, and the RSs of the $6^{th}$, $4^{th}$, $2^{nd}$ and $0^{th}$ antennas are placed in the $1^{st}$, $4^{th}$ $7^{th}$ and $10^{th}$ sub-carriers in the $1^{st}$ RB in the $3^{rd}$ sub-frame, and so on.

To be noted, in the embodiment as illustrated in Fig. 17, in each RB the RSs for various antennas are placed at the $10^{th}$ symbols of the $1^{st}$, $4^{th}$, $7^{th}$ and $10^{th}$ sub-carriers, respectively, which is just exemplary rather than limitations to the present invention. Corresponding positions (i.e., positions of 4 sub-carriers and symbols having the largest influence on the statistical error of LTE subscriber channel estimation) may be selected according to the above method for selecting sub-carriers for each or multiple RBs.

RS Placement According to the Third Embodiment

According to this embodiment, LTE-A RSs are transmitted on 2 specific sub-frames in each frame, and other sub-frames are only used to transmit LTE RSs. For example, the LTE-A RSs may be inserted into the $2^{nd}$ and $7^{th}$, $3^{rd}$ and $8^{th}$ , $2^{nd}$ and $8^{th}$ and $3^{rd}$ and $7^{th}$ sub-frames in each frame.

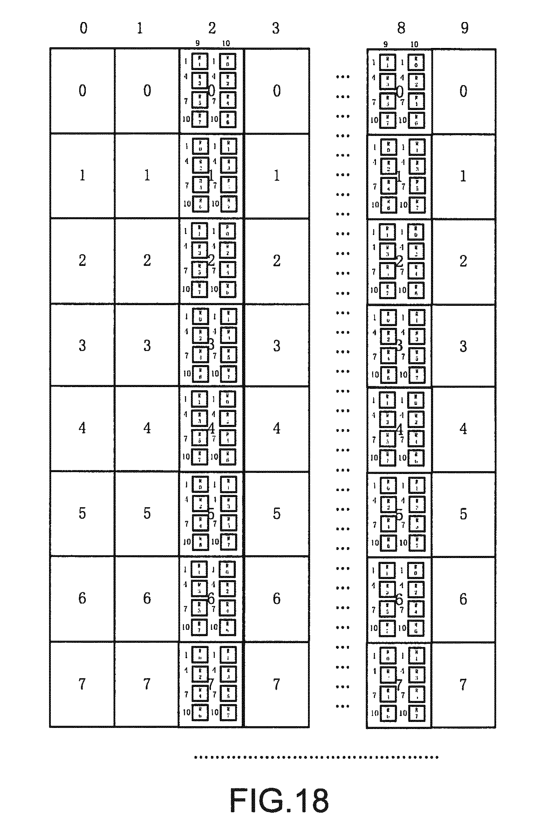

Fig. 18 illustrates an example of RS placement according to a third embodiment of the present invention. As illustrated in Fig. 18, the pilots of 8 antennas of the LTE-A subscriber are placed in each RB of the $2^{nd}$ and $8^{th}$ sub-frames. The symbol meanings in Fig. 18 are the same as those in Fig. 16.

To be noted, in the embodiment as illustrated in Fig. 18, in each RB the RSs for various antennas are placed at the $9^{th}$ and $10^{th}$ symbols of the $1^{st}$, $4^{th}$, $7^{th}$ and $10^{th}$ sub-carriers, respectively, which is just exemplary rather than limitations to the present invention. Corresponding positions (i.e., positions of 8 sub-carriers and symbols having the largest influence on the statistical error of LTE subscriber channel estimation) may be selected according to the method for selecting sub-carriers for each or multiple RBs.

RS Placement According to the Fourth Embodiment

According to this embodiment, LTE-A RSs are transmitted in all RBs on one specific sub-frame in each frame, and other sub-frames are only used to transmit LTE RSs. For example, the LTE-A RSs may be inserted into any of the $2^{nd}$, $3^{rd}$, $7^{th}$ and $8^{th}$ sub-frames in each frame.

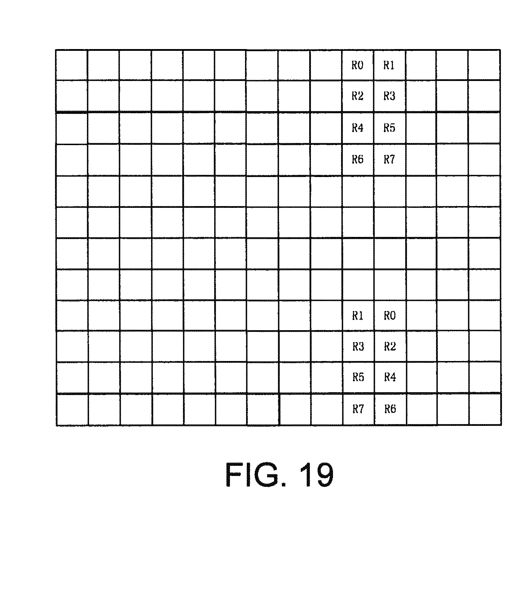

Fig. 19 illustrates, in RS placement according to a fourth embodiment of the present invention, an example of RB into which LTE-A RS is inserted. As illustrated in Fig. 19, among the RBs for being inserted with the LTE-A RSs, the $9^{th}$ and $10^{th}$ symbols and the $0^{th}$ to $3^{rd}$ and the $8^{th}$ to $11^{th}$ sub-carriers are inserted with the RSs for respective antennas.

In addition, for the same symbol position, the RSs for different antennas are inserted into adjacent sub-carriers. For example, for the position of the $9^{th}$ symbol, the RS for antenna 6 is inserted into the $8^{th}$ sub-carrier, while the RS for antenna 4 is inserted into the $9^{th}$ sub-carrier.

In addition, for the same sub-carrier position, the RSs for different antennas are inserted into adjacent symbols. For example, for the position of the $8^{th}$ sub-carrier, the RS for antenna 6 is inserted into the $9^{th}$ symbol, while the RS for antenna 7 is inserted into the $10^{th}$ symbol.

Similarly, the embodiment illustrated in Fig. 19 is just exemplary, and corresponding positions (i.e., positions of 8 sub-carriers and symbols having the largest influence on the statistical error of LTE subscriber channel estimation) may be selected according to the above method for selecting sub-carriers for each or multiple RBs.

In addition, although in the above embodiment the LTE-A pilots are inserted into each RB in the selected sub-frame, it shall be noted other embodiment is also practical, e.g., the pilots may be inserted into a certain number of RBs in the selected sub-frame.

Further, in consideration of the sector, the position of each RS in the sub-carrier is cyclically shifted according to different sectors, i.e., when a CSI-RS is in a sub-carrier with a serial number k in a certain RB in the $0^{th}$ sector, it is in sub-carriers with serial numbers k+1 modulo k and k+2 modulo k, or k-1 modulo k and k-2 modulo k in corresponding RBs in the $1^{st}$ and $2^{nd}$ sectors, respectively, herein k for example is 3 or 12. The value of x modulo y is a remainder obtained by dividing x with y. The criterion of the cyclic shift is to avoid mutual interference between LTE-A CSI-RSs of

different sectors.

To be noted, it is unnecessary for the insertion position determination unit 120 and step S220 to determine which positions are preferable for insertion, and the insertion positions may be directly determined according to the various positions predetermined by the above methods, the pre-negotiated between the transmitter and the receiver, the sub-frame positions in the frame, the RB positions in the sub-frame, and the serial numbers of the sub-carriers or symbols.

In step S210, the LTE-A pilot addition judgment unit 110 may determine whether or not to insert the LTE-A pilot into the sub-frame by determining whether the data is transmitted to the LTE subscriber or the LTE-A subscriber. In another embodiment, the LTE-A pilot addition judgment unit 110 determines whether or not to insert the LTE-A pilot into the sub-frame according to the system configuration or whether or not the service request of the LTE-A subscriber is existed.

In step S230, any method well known or to be conceived by a person skilled in the art may be adopted by the insertion unit 130 to punch the data sub-carrier and insert the LTE-A pilot, and herein is not described in details.

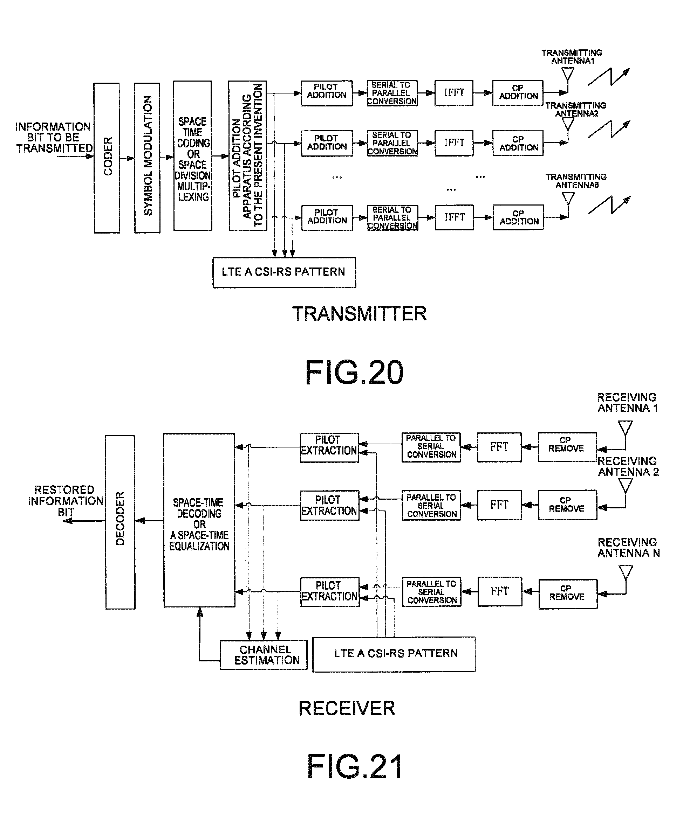

Figs. 20-21 respectively show structure diagrams of transmitter and receiver of an LTE-A backward compatible with an LTE and using an LTE-A pilot transmitting apparatus or method according to an embodiment of the present invention. As illustrated in Fig. 20, the original information bit is firstly coded by a coder, then a symbol modulator maps the coded bit information into a symbol constellation diagram such as QPSK, 16QAM or 64QAM, and a space-time coder maps the single channel signal into the multi-channel signal to be transmitted. In that case, it is determined whether or not to insert the LTE-A CSI-RS using the pilot addition method or apparatus according to the embodiment of the present invention as described above, for example according to the system configuration or the existence of the service request of the LTE-A subscriber. If yes, the insertion positions are determined according to the predetermined LTE-A CSI-RS pattern, and the LTE-A CSI-RSs are inserted by punching the LTE data sub-carriers. Next, operations such as serial-to-parallel conversion, inverse FFT, CP addition, etc. on each channel of signals added with the pilots are carried out, respectively. And finally, the signals are transmitted to the wireless physical channel through a plurality of transmitting antennas. As illustrated in Fig. 21, corresponding inverse operation is made at the receiving end of the LTE subscriber: after the receiving antenna receives a signal from the transmitter, removing the CP at first, then performing an FFT and a parallel-to-serial conversion, and extracting an RS according to the LTE RS pattern; performing a channel estimation, a space-time decoding or a space-time equalization based on the RS, and finally restoring the transmitted original information bit through a channel decoding. At the receiving end of the LTE-A subscriber, extracting a CSI-RS according to the LTE-A CSI-RS pattern, and based on the CSI-RS, performing operations such as channel estimation, Channel Quality Indication (CQI) calculation, and Precoding Matrix Index (PMI) calculation.

According to the present invention, the overhead of the CSI-RSs for estimating the LTE-A channel state information is small, that is, the amount of the CSI-RSs for estimating the channel state information of 8 transmitting antennas is only 0.96%. In addition, the positions of these CSI-RSs are selected to be on the data sub-carriers of the LTE subscriber with poor channel estimation performances. Finally, since the design of the LTE-A CSI-RS considers the backward compatibility, the insertion and usage of the CSI-RS are easily to be realized.

To be noted, although the LTE system (old system) and the LTE-A system (new system) serving as the updated system are taken as examples in the above descriptions of the embodiments of the present invention, it shall be appreciated that the descriptions are just exemplary, and the embodiments of the present invention are applicable to any condition where antennas of the transmitter of the multi-antenna system are increased. When a multi-antenna system (e.g., an LTE-A system having at most 8 transmitting antennas) is updated to a system having more transmitting antennas (e.g., a system having 10 or more antennas), pilots of the added transmitting antennas may be inserted into appropriate sub-carrier symbol blocks according to the influence on the subscriber channel estimation of the original system by each sub-carrier symbol block.

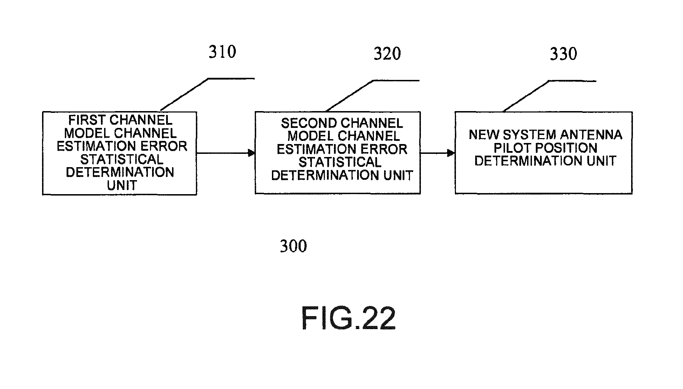

Fig. 22 illustrates a functional block diagram of a pilot insertion position determination apparatus according to an embodiment of the present invention.

As illustrated in Fig. 22, a pilot insertion position determination apparatus 300 according to the embodiment of the present invention includes a first channel model channel estimation error statistical determination unit 310, a second channel model channel estimation error statistical determination unit 320, and a new system antenna pilot position determination unit 330.

The first channel model channel estimation error statistical determination unit 310 is configured to determine a statistical distribution of channel estimation errors of an old system (e.g., LTE system) subscriber under a first channel model. The first channel model for example is an ITU-PB3km/h channel model. The channel estimation for example is based on one or more sub-carriers in the RB.

The second channel model channel estimation error statistical determination unit 320 is configured to determine a statistical distribution of channel estimation errors of an old system (e.g., LTE system) subscriber under a second channel model. The second channel model for example is an ITU-VA120km/h channel model. The channel estimation for example is based on one or more sub-carriers in the RB. To be noted, the number of sub-carriers based on which the channel estimation by the second channel model channel estimation error statistical determination unit 320 is performed shall be identical to that of sub-carriers based on which the channel estimation by the first channel model channel estimation error statistical determination unit 310 is performed.

The new system antenna pilot position determination unit 330 is configured to determine insertion positions of pilots of antennas of the new system in a sub-frame or RB, according to determination results of the first channel model channel estimation error statistical determination unit 310 and the second channel model channel estimation error statistical determination unit 320. The insertion positions of the pilots of the antennas of the new system in the sub-frame or RB may be determined according to the influence on the channel estimation of the old system subscriber by each sub-carrier symbol block and some constraint conditions (e.g., whether the sub-carrier symbol block has been occupied).

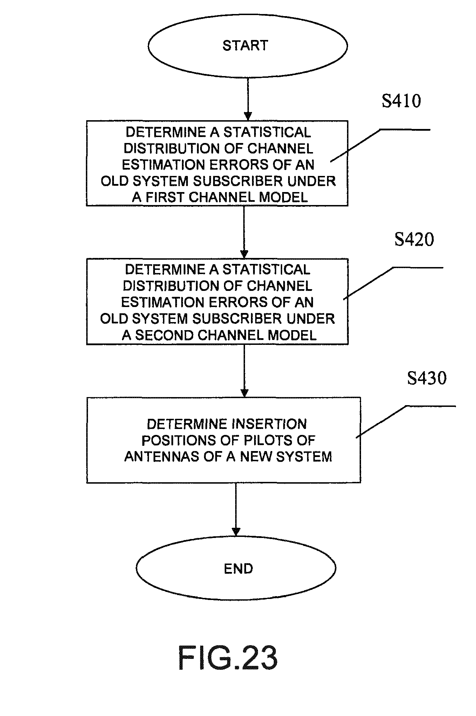

Fig. 23 illustrates a flowchart of a pilot insertion position determination method according to an embodiment of the present invention.

As illustrated in Fig. 23, the pilot insertion position determination method according to the embodiment of the present invention includes:

Step S410: a first channel model channel estimation error statistical determination unit 310 determines a statistical distribution of channel estimation errors of an old system (e.g., LTE system) subscriber under a first channel model. The first channel model for example is an ITU-PB3km/h channel model. The channel estimation for example is based on one or more sub-carriers in the RB.

Step S420: a second channel model channel estimation error statistical determination unit 320 determines a statistical distribution of channel estimation errors of an old system (e.g., LTE system) subscriber under a second channel model. The second channel model for example is an ITU-VA120km/h channel model. The channel estimation for example is based on one or more sub-carriers in the RB. To be noted, the number of sub-carriers based on which the channel estimation by the second channel model channel estimation error statistical determination unit 320 is performed shall be identical to that of sub-carriers based on which the channel estimation by the first channel model channel estimation error statistical determination unit 310 is performed.

Step S430: a new system antenna pilot position determination unit 330 determines insertion positions of pilots of antennas of the new system in a sub-frame or RB, according to determination results of the first channel model channel estimation error statistical determination unit 310 and the second channel model channel estimation error statistical determination unit 320. The insertion positions of the pilots of the antennas of the new system in the sub-frame or RB may be determined according to the influence on the channel estimation of the old system subscriber by each sub-carrier symbol block and some constraint conditions (e.g., whether the sub-carrier symbol block has been occupied).

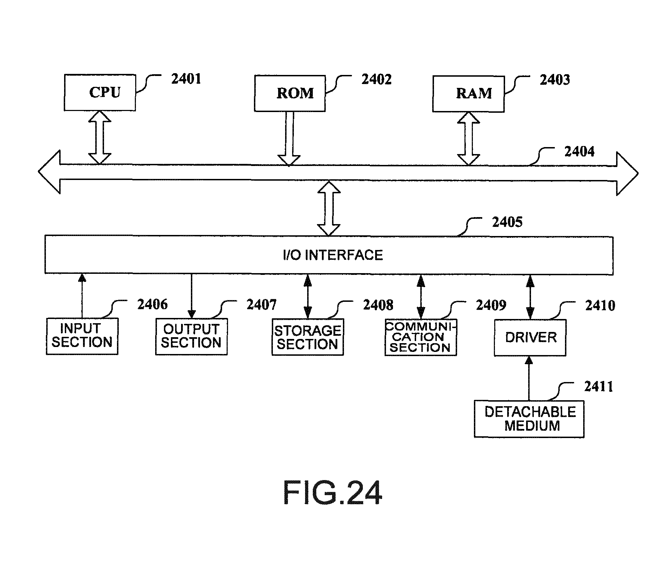

Various constituent modules, units and subunits in the above apparatus as well as various steps in the above method may be configured through software, firmware, hardware or combinations thereof. The configuring means or manners are well known by a person skilled in the art, and herein are not repeated. In case of the implementation through software or firmware, programs constructing the software shall be installed from a storage medium or network to a computer with dedicated hardware structure (e.g., a general computer as illustrated in Fig. 24) or a computer combined in a system or apparatus (e.g., a transmitter), and the computer can perform various functions when being installed with various programs.

Fig. 24 illustrates a block diagram of a computer capable of implementing the method and apparatus according to the embodiments of the present invention.

In Fig. 24, a Central Processing Unit (CPU) 2401 performs various processing according to programs stored in a Read Only Memory (ROM) 2402 or programs loaded from a storage section 2408 to a Random Access Memory (RAM) 2403. Data required by the CPU 2401 to perform various processing shall be stored in the RAM 2403 as necessary. The CPU 2401, the ROM 2402 and the RAM 2403 are connected to each other via a bus 2404. An Input/Output (I/O) interface 2405 may also be connected to the bus 2404 upon request.

Upon request the following components may be connected to the I/O interface 2405: an input section 2406 (including keypad, mouse, etc.), an output section 2407 (including display such as Cathode-Ray Tube (CRT) and Liquid Crystal Display (LCD), and loudspeaker, etc.), a storage section 2408 (including hard disk, etc.) and a communication section 2409 (including network interface card such as LAN card, modem, etc.). The communication section 2409 for example performs a communication processing through a network such as Internet. A driver 2410 may also be connected to the I/O interface 2405 as necessary. A detachable medium 2411 such as magnetic disk, optical disk, magnetic optical disk, semiconductor memory, etc. may be mounted on the driver 2410 as necessary, so that the computer program read therefrom will be installed into the storage section 2408 upon request.

In case the above series of processing is implemented through software, programs constructing the software shall be installed from a network such as the Internet or a storage medium such as the detachable medium 2411.

A person skilled in the art shall appreciate that the storage medium is not limited to the detachable medium 2411 as illustrated in Fig. 24 which stores programs and was distributed independently from the device to provide the programs to the subscriber. The detachable medium 2411 for example includes magnetic disk (including floppy disk (registered trademark)), compact disk (including Compact Disk Read Only Memory (CD-ROM) and Digital Versatile Disk (DVD)), magnetic optical disk (including Mini Disk (MD) (registered trademark)) and semiconductor memory. Or the storage medium may be the ROM 2402, the hard disk in the storage section 2408, etc. in which programs are stored and distributed to the subscriber together with the device containing them.

The present invention further provides a program product that stores machine readable instruction codes capable of executing the above method according to the embodiment of the present invention when being read and executed by a machine.

Accordingly, a storage medium for loading the program product that stores the machine readable instruction codes is also included in the disclosure of the present invention. The storage medium includes, but not limited to, floppy disk, optical disk, magnetic optical disk, memory card, memory stick, etc.

Excursus 1: a pilot addition method used in a transmitter for transmitting data to subscriber of an old system and subscriber of a new system serving as an updated system of the old system, including:

judging whether or not to insert a pilot required by the subscriber of the new system into a current resource block, determining a sub-carrier symbol block serving as an insertion position of the pilot required by the subscriber of the new system, from one or more sub-carrier symbol blocks having a large influence on the statistical performance of a channel estimation for the subscriber of the old system; and

inserting the pilot required by the subscriber of the new system into the sub-carrier symbol block serving as the insertion position of the pilot required by the subscriber of the new system determined by the determining.

Excursus 2: the pilot addition method according to excursus 1, wherein the determining determines the insertion position of the pilot required by the subscriber of the new system according to a sector.

Excursus 3: the pilot addition method according to excursus 2, wherein in case a pilot of an antenna of the new system is located at a sub-carrier having a serial number k in a certain source block in the first sector, a sub-carrier for the pilot of the antenna in corresponding source block in the second sector has a serial number of k+1 modulo k , and a sub-carrier for the pilot of the antenna in corresponding source block in the third sector has a serial number of k+2 modulo k , k is a nonnegative integer.

Excursus 4: the pilot addition method according to excursus 1, wherein the old system is an LTE system and the new system is an LTE-A system.

Excursus 5: the pilot addition method according to excursus 4, wherein the judging determines inserting the pilot required by the subscriber of the new system into each of resource blocks in $0^{th}$ to $3^{rd}$ sub-frames, $6^{th}$ to $9^{th}$ sub-frames, or $2^{nd}$ to $9^{th}$ sub-frames, or $1^{st}$ to $4^{th}$ sub-frames and $6^{th}$ to $9^{th}$ sub-frames of the frame.

Excursus 6: the pilot addition method according to excursus 5, wherein the determining determines insertion positions of pilots of two different antennas in each of the resource blocks.

Excursus 7: the pilot addition method according to excursus 6, wherein the determining determines the insertion positions of the pilots of the two antennas in each of the resource blocks such that pilots added to resource blocks with the same serial number in adjacent sub-frames are for different antennas.

Excursus 8: the pilot addition method according to excursus 6, wherein the determining determines the insertion positions of the pilots of the two antennas in each of the resource blocks such that pilots added to resource blocks with adjacent serial numbers in the same sub-frame are for different antennas.

Excursus 9: the pilot addition method according to excursus 4, wherein the judging determines inserting the pilot required by the subscriber of the new system into each of resource blocks in a $2^{nd}$ sub-frame, a $3^{rd}$ sub-frame, a $7^{th}$ sub-frame and an $8^{th}$ sub-frame of the frame.

Excursus 10: the pilot addition method according to excursus 9, wherein the determining determines insertion positions of pilots of four different antennas in each of the resource blocks.

Excursus 11: the pilot addition method according to excursus 9, wherein the determining determines the insertion positions of the pilots of the four antennas in each of the resource blocks such that pilots added to resource blocks with the same serial number in adjacent sub-frames are for different antennas.

Excursus 12: the pilot addition method according to excursus 9, wherein the determining determines the insertion positions of the pilots of the four antennas in each of the resource blocks such that pilots added to resource blocks with adjacent serial numbers in the same sub-frame are for different antennas.

Excursus 13: the pilot addition method according to excursus 4, wherein the judging determines inserting the pilot required by the subscriber of the new system into each of resource blocks in any one or two of a $2^{nd}$ sub-frame, a $3^{rd}$ sub-frame, a $7^{th}$ sub-frame and an $8^{th}$ sub-frame of the frame.

Excursus 14: the pilot addition method according to excursus 13, wherein the determining determines insertion positions of pilots of eight different antennas in each of the resource blocks.

Excursus 15: the pilot addition method according to excursus 14, wherein the judging determines inserting the pilot required by the subscriber of the new system into each of the resource blocks of any two of the 2nd, 3rd, 7th and 8th sub-frames of the frame, the pilot is inserted into positions of sub-carrier symbol blocks determined by symbols with serial numbers 9 and 10 in sub-carriers with serial numbers 1, 4, 7 and 10 in the resource block.

Excursus 16: a pilot addition apparatus used in a transmitter for transmitting data to subscriber of an old system and subscriber of a new system serving as an updated system of the old system, including:

> a new system pilot addition judgment unit configured to judge whether or not to insert a pilot required by the subscriber of the new system into a current resource block;
> an insertion position determination unit configured to determine a sub-carrier symbol block serving as an insertion position of the pilot required by the subscriber of the new system, from one or more sub-carrier symbol blocks having a large influence on the statistical performance for a channel estimation of the subscriber of the old system; and
> an insertion unit configured to insert the pilot required by the subscriber of the new system into the sub-carrier symbol block serving as the insertion position of the pilot required by the subscriber of the new system determined by the insertion position determination unit.

Excursus 17: the pilot addition method according to excursus 16, wherein the insertion position determination unit determines the insertion position of the pilot required by the subscriber of the new system according to sectors.

Excursus 18: the pilot addition method according to excursus 17, wherein in case a pilot of an antenna of the new system is located at a sub-carrier having a serial number k in a certain source block in the first sector, a sub-carrier for the pilot of the antenna in corresponding source block in the second sector has a serial number of k+1 modulo k , and a sub-carrier for the pilot of the antenna in corresponding source block in the third sector has a serial number of k+2 modulo k , k is a nonnegative integer.

Excursus 19: the pilot addition method according to excursus 16, wherein the old system is an LTE system and the new system is an LTE-A system.

Excursus 20: the pilot addition method according to excursus 19, wherein the new system pilot addition judgment unit determines inserting the pilot required by the subscriber of the new system into each of resource blocks in 0th to 3rd sub-frames, 6th to 9th sub-frames, or 2nd to 9th sub-frames, or 1st to 4th sub-frames and 6th to 9th sub-frames of the frame.

Excursus 21: the pilot addition method according to excursus 19, wherein the new system pilot addition judgment unit determines inserting the pilot required by the subscriber of the new system into each of resource blocks in a 2nd sub-frame, a 3rd sub-frame, a 7th sub-frame and an 8th sub-frame of the frame.

Excursus 22: the pilot addition method according to excursus 19, wherein the new system pilot addition judgment unit determines inserting the pilot required by the subscriber of the new system into each of resource blocks in any one or two of a 2nd sub-frame, a 3rd sub-frame, a 7th sub-frame and an 8th sub-frame of the frame.

Excursus 23: the pilot addition method according to excursus 19, wherein the insertion position determination unit determines the insertion position of the pilot required by the subscriber of the new system in each of the resource blocks such that pilots added to resource blocks with the same serial number in adjacent sub-frames are for different antennas.

Excursus 24: the pilot addition method according to excursus 19, wherein the insertion position determination unit determines the insertion position of the pilot required by the subscriber of the new system in each of the resource blocks such that pilots added to resource blocks with adjacent serial numbers in the same sub-frames are for different antennas.

Excursus 25: a pilot insertion position determination apparatus, including:

> a first channel model channel estimation error statistical determination unit configured to determine a statistical distribution of channel estimation errors of an old system subscriber under a first channel model;
> a second channel model channel estimation error statistical determination unit configured to determine a statistical distribution of channel estimation errors of an old system subscriber under a second channel model; and
> a new system antenna pilot position determination unit configured to determine insertion positions of pilots of antennas of a new system in a sub-frame or RB, according to determination results of the first channel model channel estimation error statistical determination unit and the second channel model channel estimation error statistical determination unit.

Excursus 26: a pilot insertion position determination method, including:

> determining a statistical distribution of channel estimation errors of an old system subscriber under a first channel model;
determining a statistical distribution of channel estimation errors of an old system subscriber under a second channel model; and
determining insertion positions of pilots of antennas of a new system in a sub-frame or RB, according to determination results of the above two determining.

Features described and/or illustrated with respect to one embodiment can be used in one or more other embodiments in a same or similar way, and/or combine with or replace features in other embodiments.

To be noted, the term "include/comprise" or "including/comprising" herein refers to existence of feature, component, step or assembly, not excluding existence or addition of one or more other features, components, steps, assemblies or a combination thereof.

In addition, the method of the present invention is not limited to be executed according to the time order as described herein, and can be executed in other time sequentially, concurrently or independently. Thus, the execution order of the method as described herein does not limit the technical scope of the present invention.

**Claims**

1. A pilot addition method used in a transmitter for transmitting data to subscriber of an old system and subscriber of a new system serving as an updated system of the old system, comprising:

   judging whether or not to insert a pilot required by the subscriber of the new system into a current resource block, determining a sub-carrier symbol block serving as an insertion position of the pilot required by the subscriber of the new system, from one or more sub-carrier symbol blocks having a large influence on the statistical performance of a channel estimation for the subscriber of the old system; and
   inserting the pilot required by the subscriber of the new system into the sub-carrier symbol block serving as the insertion position of the pilot required by the subscriber of the new system determined by the determining.

2. The pilot addition method according to claim 1, wherein the determining determines the insertion position of the pilot required by the subscriber of the new system according to a sector.

3. The pilot addition method according to claim 2, wherein in case a pilot of an antenna of the new system is located at a sub-carrier having a serial number k in a certain source block in the first sector, a sub-carrier for the pilot of the antenna in corresponding source block in the second sector has a serial number of k+1 modulo k , and a sub-carrier for the pilot of the antenna in corresponding source block in the third sector has a serial number of k+2 modulo k , k is a nonnegative integer.

4. The pilot addition method according to claim 1, wherein the old system is an LTE system and the new system is an LTE-A system.

5. The pilot addition method according to claim 4, wherein the judging determines inserting the pilot required by the subscriber of the new system into each or several of resource blocks in $0^{th}$ to $3^{rd}$ sub-frames, $6^{th}$ to $9^{th}$ sub-frames, or $2^{nd}$ to $9^{th}$ sub-frames, or $1^{st}$ to $4^{th}$ sub-frames and $6^{th}$ to $9^{th}$ sub-frames of the frame.

6. The pilot addition method according to claim 4, wherein the judging determines inserting the pilot required by the subscriber of the new system into each of resource blocks in a $2^{nd}$ sub-frame, a $3^{rd}$ sub-frame, a $7^{th}$ sub-frame and an $8^{th}$ sub-frame of the frame.

7. The pilot addition method according to claim 4, wherein the judging determines inserting the pilot required by the subscriber of the new system into each of resource blocks in any one or two of a $2^{nd}$ sub-frame, a $3^{rd}$ sub-frame, a $7^{th}$ sub-frame and an $8^{th}$ sub-frame of the frame.

8. The pilot addition method according to any of claims 5 to 7, wherein the determining determines insertion positions of pilots of four antennas in each of resource blocks such that pilots added to resource blocks with the same serial number in adjacent sub-frames are for different antennas.

9. The pilot addition method according to any of claims 5 to 7, wherein the determining determines insertion positions of pilots of four antennas in each of resource blocks such that pilots added to resource blocks with adjacent serial numbers in the same sub-frame are for different antennas.

10. A pilot addition apparatus used in a transmitter for transmitting data to subscriber of an old system and subscriber of a new system serving as an updated system of the old system, comprising:

a new system pilot addition judgment unit configured to judge whether or not to insert a pilot required by the subscriber of the new system into a current resource block,
an insertion position determination unit configured to determine a sub-carrier symbol block serving as an insertion position of the pilot required by the subscriber of the new system, from one or more sub-carrier symbol blocks having a large influence on the statistical performance for a channel estimation of the subscriber of the old system; and
an insertion unit configured to insert the pilot required by the subscriber of the new system into the sub-carrier symbol block serving as the insertion position of the pilot required by the subscriber of the new system determined by the insertion position determination unit.

110             120             130

| LTE-A PILOT ADDITION JUDGMENT UNIT | → | INSERTION POSITION DETERMINATION UNIT | → | INSERTION UNIT |

100

# FIG. 1

S210             S220             S230

| JUDGE WHETHER OR NOT TO ADD AN LTE-A PILOT | → | DETERMINE AN INSERTION POSITION | → | INSERTE THE PILOT |

# FIG. 2

ANTENNA 0

ANTENNA 1

ANTENNA 2

ANTENNA 3

FIG.3

ANTENNA 0

ANTENNA 1

ANTENNA 2

ANTENNA 3

FIG.4

EP 2 485 446 A1

| | ANTENNA 0 |
| | ANTENNA 1 |
| | ANTENNA 2 |
| | ANTENNA 3 |

FIG.5

FIG.6

# FIG.7

ANTENNA 0

ANTENNA 1

ANTENNA 2

ANTENNA 3

LTE-A
ANTENNA 0~7

# FIG.8

FIG.9

FIG.10

ANTENNA 0

ANTENNA 1

ANTENNA 2

ANTENNA 3

LTE-A
ANTENNA 0~7

## FIG.11

## FIG.12

FIG.13

| | ANTENNA 0 |
| | ANTENNA 1 |
| | ANTENNA 2 |
| | ANTENNA 3 |
| | LTE-A ANTENNA 0~7 |

FIG.14

FIG.15

FIG.16

FIG.17

FIG.18

FIG. 19

EP 2 485 446 A1

TRANSMITTER

FIG.20

RECEIVER

FIG.21

29

310                    320                    330

| FIRST CHANNEL MODEL CHANNEL ESTIMATION ERROR STATISTICAL DETERMINATION UNIT | → | SECOND CHANNEL MODEL CHANNEL ESTIMATION ERROR STATISTICAL DETERMINATION UNIT | → | NEW SYSTEM ANTENNA PILOT POSITION DETERMINATION UNIT |

300

# FIG.22

START

S410

DETERMINE A STATISTICAL
DISTRIBUTION OF CHANNEL
ESTIMATION ERRORS OF AN
OLD SYSTEM SUBSCRIBER UNDER
A FIRST CHANNEL MODEL

S420

DETERMINE A STATISTICAL
DISTRIBUTION OF CHANNEL
ESTIMATION ERRORS OF AN
OLD SYSTEM SUBSCRIBER UNDER
A SECOND CHANNEL MODEL

S430

DETERMINE INSERTION
POSITIONS OF PILOTS OF
ANTENNAS OF A NEW SYSTEM

END

FIG.23

CPU ⌇ 2401    ROM ⌇ 2402    RAM ⌇ 2403

⌇ 2404

⌇ 2405

I/O INTERFACE

2406    2407    2408    2409    2410

| INPUT SECTION | OUTPUT SECTION | STORAGE SECTION | COMMUNI-CATION SECTION | DRIVER |

⌇ 2411

DETACHABLE MEDIUM

# FIG.24

<table>
<tr><td rowspan="2" align="center"><h2>INTERNATIONAL SEARCH REPORT</h2></td><td>International application No.</td></tr>
<tr><td>PCT/CN2009/074311</td></tr>
</table>

**A. CLASSIFICATION OF SUBJECT MATTER**

H04L27/26 (2006.01) i

According to International Patent Classification (IPC) or to both national classification and IPC

**B. FIELDS SEARCHED**

Minimum documentation searched (classification system followed by classification symbols)

IPC: H04L27/-, H04W72/-

Documentation searched other than minimum documentation to the extent that such documents are included in the fields searched

Electronic data base consulted during the international search (name of data base and, where practicable, search terms used)

CPRSABS, CNKI, WPI, EPODOC: LTE/LTE-A/Long Term Evolution, reference signal？/RS/pilot, insert+/add+/interven+/append+/inset+/punch+, position/place/site, channel, estimat+/detect+

**C. DOCUMENTS CONSIDERED TO BE RELEVANT**

| Category* | Citation of document, with indication, where appropriate, of the relevant passages | Relevant to claim No. |
|---|---|---|
| Y | CN101399589A (ZTE CORP) 01 Apr. 2009 (01.04.2009) claim 1, page 5 paragraph 4 of the description | 1, 4, 10 |
| A | | 2-3, 5-9 |
| Y | WO2008073246A2 (INTERDIGITAL TECH CORP) 19 Jun. 2008 (19.06.2008) paragraph 0040 of the description | 1, 4, 10 |
| A | | 2-3, 5-9 |
| A | CN101453438A (SHANGHAI RES CT FOR WIRELESS C) 10 Jun. 2009 (10.06.2009) the whole document | 1-10 |
| A | EP1679850A2 (SAMSUNG ELECTRONICS CO LTD et al) 12 Jul. 2006 (12.07.2006) the whole document | 1-10 |

☐ Further documents are listed in the continuation of Box C.  ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 17 Jun. 2010 (17.06.2010) | **08 Jul. 2010 (08.07.2010)** |

| Name and mailing address of the ISA/CN<br>The State Intellectual Property Office, the P.R.China<br>6 Xitucheng Rd., Jimen Bridge, Haidian District, Beijing, China 100088<br>Facsimile No. 86-10-62019451 | Authorized officer<br><br>ZHANG Yanqing<br>Telephone No. (86-10)62411428 |
|---|---|

Form PCT/ISA /210 (second sheet) (July 2009)

## INTERNATIONAL SEARCH REPORT
Information on patent family members

| | International application No. |
|---|---|
| | *PCT/CN2009/074311* |

| Patent Documents referred in the Report | Publication Date | Patent Family | Publication Date |
|---|---|---|---|
| CN101399589A | 01.04.2009 | None | |
| WO2008073246A2 | 19.06.2008 | WO2008073246A3 | 04.12.2008 |
| | | WO2008073246A9 | 23.07.2009 |
| | | KR20090083957A | 04.08.2009 |
| | | EP2103068A2 | 23.09.2009 |
| | | CN101548517A | 30.09.2009 |
| | | KR20090099014A | 18.09.2009 |
| | | WO2008063457A2 | 29.05.2008 |
| | | US2008137718A1 | 12.06.2008 |
| | | US2008181097A1 | 31.07.2008 |
| | | JP2010512115T | 15.04.2010 |
| CN101453438A | 10.06.2009 | None | |
| EP1679850A2 | 12.07.2006 | KR20060082228A | 18.07.2006 |
| | | US2006153144A1 | 13.07.2006 |

Form PCT/ISA /210 (patent family annex) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 101166053
- WO 2008045803 A
- WO 2008150772 A1

**Non-patent literature cited in the description**

- RS design for DL higher order MIMO in LTE-A. *CATT, 3GPP RAN1 #55bis Meeting,* January 2009
- DL RS Designs for Higher Order MIMO. *3GPP TSG RAN WG1 #56 Athens,* 09 February 2009
- design aspects of high-order MIMO for LTE. *3GPP RAN1 #55bis Meeting,* January 2009
- DL Reference Signal Design for CSI generation in LTE-Advanced. *3GPP RAN1 #58 Meeting,* August 2009